**Europäisches Patentamt**

**European Patent Office**

**Office européen des brevets**

(19)

(11) Veröffentlichungsnummer : **0 340 414 B1**

(12)

# EUROPÄISCHE PATENTSCHRIFT

(45) Veröffentlichungstag der Patentschrift :
**20.05.92 Patentblatt 92/21**

(51) Int. Cl.$^5$ : **C04B 24/24, B65D 90/24**

(21) Anmeldenummer : **89104049.5**

(22) Anmeldetag : **08.03.89**

(54) **Flüssigkeitsundurchlässige Auffangbehälter aus Beton.**

(30) Priorität : **03.05.88 DE 3814904**

(43) Veröffentlichungstag der Anmeldung :
**08.11.89 Patentblatt 89/45**

(45) Bekanntmachung des Hinweises auf die
Patenterteilung :
**20.05.92 Patentblatt 92/21**

(84) Benannte Vertragsstaaten :
**AT BE CH DE FR GB IT LI NL**

(56) Entgegenhaltungen :
**DE-A- 2 018 214**
**US-A- 3 354 169**

(73) Patentinhaber : **HÜLS**
**AKTIENGESELLSCHAFT**
**Paul-Baumann-Strasse 1**
**W-4370 Marl 1 (DE)**

(72) Erfinder : **Groche, Friedrich, Dipl. -Ing. (FH)**
**Saturnweg 18**
**W-4370 Marl (DE)**

EP 0 340 414 B1

**Beschreibung**

Bei Behältern, insbesondere Großbehältern, die wassergefährdende Flüssigkeiten enthalten, sind aufgrund behördlicher Auflagen Vorsorgemaßnahmen für den Fall zu treffen, daß sie undicht werden und die auslaufende Flüssigkeit das umgebende Erdreich kontaminieren könnte.

Eine der Möglichkeiten, dies zu verhindern, besteht darin, Auffangräume oder Auffangtassen vorzusehen, die in der Lage sind, die in den Behältern aufbewahrten Flüssigkeiten zurückzuhalten. Als Baumaterial für derartige Behälter kommt aus wirtschaftlichen und technischen Gründen vorwiegend Stahlbeton infrage. Der übliche mit Zement gebundene Beton ist jedoch für viele Flüssigkeiten nicht genügend undurchlässig.

Grundsätzlich könnte man daran denken, in den Beton, der zur Herstellung der Auffangbehälter verwendet wird, Zusatzmittel einzumischen, mit denen die Eigenschaften des Betons verändert werden können. Beispielsweise gibt es Dichtungsmittel auf Basis von Silikonen, die den Beton hydrophobieren. Es ist auch bekannt, daß wäßrige Styrol-Butadien-Dispersionen wie z. B. LIPATON[R] (Hersteller: HÜLS AG, D-4370 Marl) sich als Zusatz zu mit Zement gebundenem Mörtel eignen und damit die Haftfestigkeit und Chemikalienbeständigkeit verbessern (vgl. DE-OS 20 18 214). Diese Dispersionen schienen zur Abdichtung von Stahlbetonkonstruktionen jedoch nicht geeignet zu sein, da Anstrichfilme auf gleicher Basis von vielen Flüssigkeiten innerhalb kurzer Zeit aufgelöst werden.

Es sind auch andere Möglichkeiten denkbar, Auffangbehälter aus Beton flüssigkeitsundurchlässig zu machen. Beispielsweise könnte der Behälter mit einer Dichtungsbahn überzogen werden, die gegen Witterungseinflüsse widerstandsfähig sein müßte. Dies ist nur auf vergleichsweise aufwendige Weise möglich. Außerdem besteht die Gefahr, daß mechanische Einflüsse zur Beschädigung der Dichtungsbahnen führen. Man könnte den Behälter auch mit einer Beschichtung versehen.

Nun ist aber zu berücksichtigen, daß bei den üblichen Stahlbetonkonstruktionen in den ersten Wochen nach Fertigstellung Schwindrisse auftreten können. Infolge von Temperaturschwankungen kann es auch später noch zu Rißbildungen kommen. Die üblichen Beschichtungsmaterialien sind nicht elastisch genug, um diese Risse zu überbrücken. Darüber hinaus werden viele Beschichtungen von organischen Lösemitteln aufgelöst, sie sind also nicht hinreichend beständig diesen gegenüber und erfüllen nicht die behördlichen Anforderungen im Hinblick auf Nichtbrennbarkeit. Schließlich gewähren die üblichen Beschichtungen keinen hinreichenden Schutz gegen elektrostatische Aufladung.

Ziel der Erfindung waren somit Auffangbehälter aus Beton zum Auffangen wassergefährdender Flüssigkeiten, die die vorgenannten Anforderungen erfüllen.

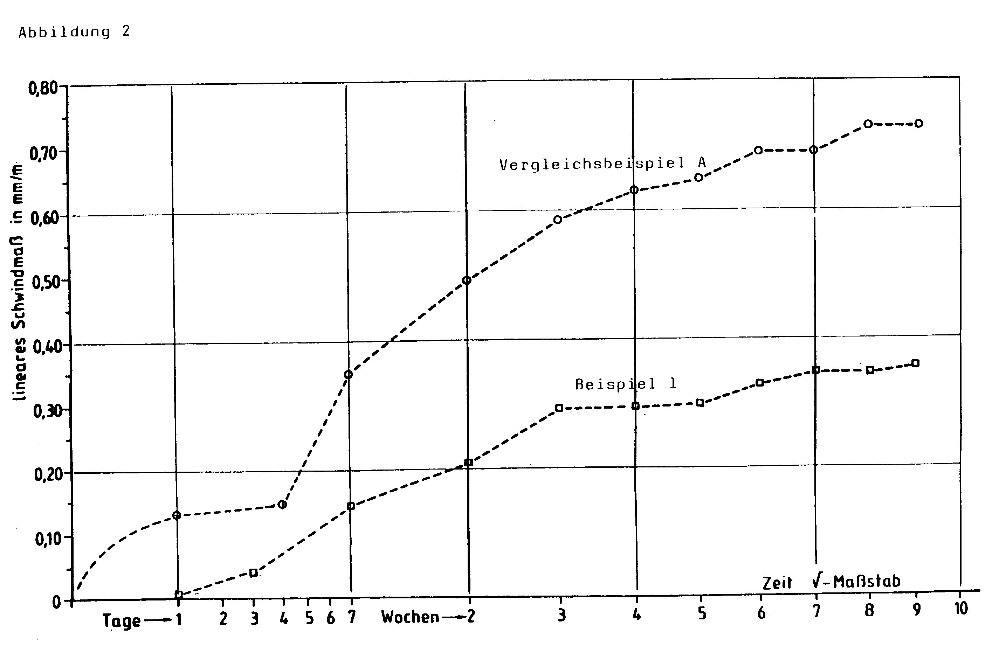

Es wurden jetzt solche Auffangbehälter gefunden. Diese sind dadurch gekennzeichnet, daß dem Beton bei der Herstellung 5 bis 25 Massenprozent - bezogen auf den Zementanteil - einer wäßrigen Styrol-Butadien-Copolymerisat-Dispersion zugesetzt werden, die vorzugsweise Entschäumer enthält und deren Festkörperanteil 30 bis 60 Massenprozent, insbesondere 40 bis 55 Massenprozent, beträgt. Die Form und Größe der Auffangbehälter ist im wesentlichen unkritisch. Sie kann den jeweiligen Anwendungsbedingungen angepaßt werden. Vorzugsweise handelt es sich um Auffangswannen oder -tassen. Überraschenderweise wird durch den Zusatz der Dispersion das lineare Schwindmaß deutlich reduziert (vgl. Abb. 2) und die Biegezugfestigkeit wesentlich erhöht. Damit wird die Neigung des jungen Betons zur Bildung von Schwindrissen erheblich verringert.

Der Begriff "wassergefährdende Flüssigkeit" umfaßt inbesondere Flüssigkeiten, die die Qualität des Grundwassers beeinträchtigen können. Hierzu zählen Alkohole, organische Säuren, Isocyanate, aliphatische und aromatische Kohlenwasserstoffe, Halogenalkane, Alkylphenole, Anhydride und Ethersulfate. Beispielhaft seien Treibstoffe wie z. B. Benzin, Hexan, Benzol und Octylphenol aufgeführt.

Die Herstellung der erfindungsgemäßen Auffangbehälter erfolgt nach Methoden, die dem Fachmann grundsätzlich bekannt sind. Die Zugabe der Dispersion erfolgt üblicherweise im Zuge des Mischvorganges.

Die geeigneten, wäßrigen Kunststoffdispersionen sind grundsätzlich bekannt. Sie werden z. B. in der DE-OS 20 18 214 beschrieben. Es empfiehlt sich, der Dispersion einen Entschäumer auf Silikonbasis zuzusetzen.

Sie enthalten als wesentliche Feststoffkomponente ein Styrol-Butadien-Copolymerisat in einem Anteil von vorzugsweise 30 bis 60, insbesondere 40 bis 55 Massenprozent.

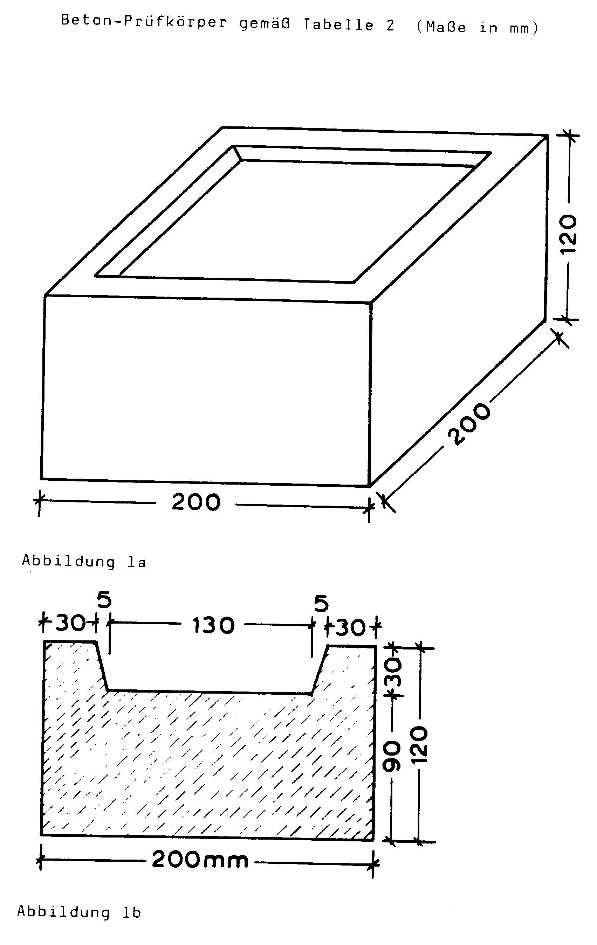

Zur Untersuchung der Undurchlässigkeit wurden Prüfkörper gemäß DIN 1048 Teil 1, Abschnitt 4.7 (Größe 200 x 200 x 120 mm) sowie Quader der gleichen Größe mit einer 30 mm tiefen Mulde gemäß Abbildungen 1a und 1b hergestellt. Dabei ging man von folgenden Betonmischungen aus (Angaben in kg pro m³ Betonmischung):

|  | Beispiel 1 | Vergleichsbeispiel A |
|---|---|---|
| Hochofenzement HOZ 35 L | 320 | 330 |
| LIPATON[R] SB 5813 [1)] | 40 | - |
| Wasser | 115 | 191 |
| Mehlkorn | 45 | 33 |
| Sand und Kies | 1 830 | 1 796 |
| Frischrohdichte | 2 350 | 2 350 |

[1)] LIPATON[R] SB 5813 ist eine wäßrige, zur Modifizierung hydraulischer Bindemittel vorkonfektionierte, verseifungsbeständige Styrol-Butadien-Dispersion. Die Eigenschaften des Produktes sind der Produktinformation vom März 1988 zu entnehmen.

Die Prüfkörper werden - entsprechend den Angaben in der nachfolgenden Tabelle - unterschiedlich nachbehandelt. Anschließend werden die Eindringtiefen verschiedener Flüssigkeiten bestimmt.

Tabelle 1: Lagerung der Probekörper und Bestimmung der Eindringtiefe von Wasser in mm gemäß DIN 1048, Teil 1

| Vorlagerung | Beispiel 1 | Vergleichsbeispiel A |
|---|---|---|
| Lagerung: 28 T im Raum | 13 | 120 |
| Lagerung:  7 T feucht + 75 T im Raum | 12 | 88 |
| Lagerung: 14 T feucht + 70 T im Raum | 11 | 82 |

Tabelle 2: Lagerung der Quader mit Mulde und Bestimmung der Eindringtiefen der Flüssigkeiten in mm

| Flüssigkeit | Lagerung | Verweil-dauer | Beispiel 1 | Vergleichs-beispiel A |
|---|---|---|---|---|
| Di-2-ethylhexyladipat | 60 T im Raum | 7 T | 4 - 10 | 43 |
| Addukt aus Laurylalkohol und 17 Ethylenoxideinheiten | 60 T im Raum | 14 T | 2 | 8 |
| Gemisch von alkylierten Benzolen mit einem Siedepunktsbereich von 150 bis 195 °C | 7 T feucht + 60 T im Raum | 14 T | 7 | 80 |
| 28%ige wäßrige Lösung des Natriumsalzes eines sulfatierten Adduktes von 2,5 Einheiten Ethylenoxid an ein Gemisch von C(12)- bis C(14)-Alkoholen | 60 T im Raum | 14 T | 0 | 7 |
| Dichlorethan | 7 T feucht + 33 T im Raum | 14 T | 5 | 75 |
| Adipinsäuredibutylester | 3 T feucht + 40 T im Raum | 14 T | 4 | 30 - 35 |

Erläuterungen zu den Tabellen:

T bedeutet Tage

Die Lagerung im Raum erfolgte bei 20 °C und 55 % relativer Luftfeuchte. Bei der Prüfung der Quader mit Mulde wurde in folgender Weise vorgegangen: In die Mulde wurden 450 ml der jeweiligen Flüssigkeit eingefüllt. Nach Ablauf der Verweildauer wurde die Eindringtiefe an den frischen Bruchflächen des unmittelbar nach dem Entleeren gespaltenen Betonquaders bestimmt.

## Patentansprüche

1. Auffangbehälter zum Auffangen wassergefährdender Flüssigkeiten aus mit Zement gebundenem Beton, dadurch gekennzeichnet, daß dem Beton bei der Herstellung 5 bis 25 Massenprozent - bezogen auf den Zementanteil - einer wäßrigen Styrol-Butadien-Copolymerisat-Dispersion zugesetzt werden und der Beton in üblicher Weise nachbehandelt wird.

2. Auffangbehälter nach Anspruch 1, dadurch gekennzeichnet, daß die Dispersion einen Festkörperanteil von 30 bis 60, vorzugsweise 40 bis 55 Massenprozent, aufweist.

3. Auffangbehälter nach Anspruch 1 oder 2, dadurch gekennzeichnet, daß dieser die Form einer Auffangwanne oder Auffangtasse hat.

4. Auffangbehälter nach den Ansprüchen 1 bis 3, dadurch gekennzeichnet, daß die zur Herstellung verwendete Kuntstoffdispersion Entschäumer enthält.

**Claims**

1. An interception container composed of cement-bound concrete for intercepting potentially water-polluting liquids, characterised in that 5 to 25 percent by mass -relative to the cement content - of an aqueous styrene/butadiene/copolymer dispersion is added to the concrete during preparation, and the concrete is further treated in conventional manner.

2. An interception container according to claim 1, characterised in that the dispersion has a solids content from 30 to 60, preferably 40 to 55 percent, by mass.

3. An interception container according to claim 1 or 2, characterised in that it has the shape of an interception trough or interception cup.

4. An interception container according to any of claims 1 to 3, characterised in that the plastics dispersion used for producing it contains an antifoam.

**Revendications**

1. Réservoir collecteur pour recevoir des liquides qui constituent un danger de pollution pour l'eau en béton lié à du ciment, caractérisé en ce que l'on ajoute au béton lors de la production, 5 à 25 % de la masse, rapporté à la quantité de ciment, d'une dispersion aqueuse de copolymères de styrènebutadiène et que l'on traite ensuite le béton d'une manière usuelle.

2. Réservoir collecteur selon la revendication 1, caractérisé en ce que la dispersion comporte une quantité de solides de 30 à 60, de préférence de 40 à 55 % de la masse.

3. Réservoir collecteur selon la revendication 1 ou 2, caractérisé en ce que celui-ci a la forme d'une cuve ou d'une cuvette de réception.

4. Réservoir collecteur selon les revendications 1 à 3, caractérisé en ce que la dispersion de matière plastique employée pour la fabrication, renferme des agents antimoussants.

Beton-Prüfkörper gemäß Tabelle 2 (Maße in mm)

Abbildung 1a

Abbildung 1b